# EUROPÄISCHE PATENTANMELDUNG

(11) **EP 1 847 372 A2**
(43) Veröffentlichungstag der Anmeldung: **24.10.2007**
(21) Anmeldenummer: 07006158.5
(22) Anmeldetag: 26.03.2007
(51) Int. Cl.: B29C 45/16, B29D 22/00, F16D 25/00, F04B 39/12, B29L 22/00

(54) **Verfahren zur Herstellung von Zylindergehäusen**

(30) Priorität: 21.04.2006 DE 102006018698
(71) Anmelder: LuK Lamellen und Kupplungsbau Beteiligungs KG, 77815 Bühl (DE)
(72) Erfinder: Christiaens, Yannick, 45470 Loury (FR); Bourienne, Christian, 45400 Fleury-les-Aubais (FR)

(57) **Zusammenfassung**

Verfahren zur Herstellung von Zylindergehäusen (1) mittels mindestens zwei Herstellungsschritten wobei ein Herstellungsschritt das Erzeugen eines äußeren Kunststoffzylinders (2) und ein zweiter Herstellungsschritt das Erzeugen eines inneren Kunststoffzylinders (3) umfasst.

## Beschreibung

Die vorliegende Erfindung befasst sich mit der Herstellung von Zylindergehäusen.

Solche Zylindergehäuse werden in hydraulischen Systemen verwendet. Ein solches hydraulisches System kann zum Beispiel aus einem Geberzylinder und einem mit dem Geberzylinder über eine Druckmediumsleitung verbundenen Nehmerzylinder bestehen. In dem Geberzylinder ist ein axial verschiebbarer Kolben angeordnet, der den mit Hydraulikflüssigkeit gefüllten Druckraum begrenzt. Wird der Kolben axial verschoben, so verändert sich die Größe des Druckraums und die Hydraulikflüssigkeit wird mit Druck beaufschlagt. Dieser Druck wird über die Druckmediumsleitung an den Nehmerzylinder weitergegeben.

DE 103 51 907 beschreibt ein solches System, insbesondere ein hydraulisches System für Kraftfahrzeuge.

Solche hydraulische Systeme werden im Fahrzeugbereich unter anderem zur Betätigung der Fahrzeugkupplung verwendet. Dabei wird der Nehmerzylinder um die Getriebeeingangswelle befestigt. Diese Befestigung erfordert an der Außenseite des Zylinders geeignete Befestigungsmittel, wie zum Beispiel Nuten oder Befestigungsnasen. Andererseits ist es gewünscht, dass die Innenseite des Zylindergehäuses gleichmäßig ausgebildet ist, so dass unter Anderem eine reibungsarme Bewegung des Kolbens ermöglicht wird. Werden an der Außenseite des Zylindergehäuses über ein Spritzgußverfahren Nuten und/oder Rippen gebildet, die zur Befestigung des Zylinders dienen, so führt dies in der Regel dazu, dass in der Innenseite des Zylinders sich Wellen bilden, die zu Funktionsschwierigkeiten führen aufgrund der Veränderung der Oberfläche und der Abweichung von der Zylindrizität des Zylinders.

DE 103 51 907 beschreibt dazu einen Zylinder, der eine Laufbuchse aufweist, die aus Metall gebildet ist. Eine solche Buchse ist zwar widerstandsfähig und deshalb langlebig, auch weist eine solche Buchse eine gleichmäßige Innenfläche auf, jedoch ist es relativ kostspielig eine solche Buchse herzustellen und diese in den Zylinder einzubringen. Außerdem ergeben sich bei dem Übergang zwischen Metall und Kunststoff, wie es bei einer metallenen Laufbuchse sowohl zum Außengehäuse, als auch zum Kolben gegeben ist immer wieder Probleme z.B. mit der Dichtigkeit, als auch mit der Verbindung zwischen Metall und Kunststoff.

Der vorliegenden Erfindung liegt die Aufgabe zugrunde ein neues Verfahren zur Herstellung von Zylindergehäusen bereitzustellen.

Gelöst wird diese Aufgabe durch ein Verfahren zur Herstellung von Zylindergehäusen mittels mindestens zweier Herstellungsschritte wobei ein Herstellungsschritt das Erzeugen eines äußeren Kunststoffzylinders und ein zweiter Herstellungsschritt das Erzeugen eines inneren Kunststoffzylinders umfasst. Durch die Herstellung des Zylindergehäuses aus Kunststoff kann einerseits ein leichtes und preisgünstiges Zylindergehäuse hergestellt werden, andererseits kann auf eine Metallhülse verzichtet werden, so dass die bekannten Probleme beim Übergang zwischen Metall und Kunststoff vermieden werden können. Auch kann durch die Herstellung des äußeren Zylinders separat von dem inneren Zylinder, der äußere Zylinder so hergestellt werden, dass die Außenseite des Zylinders Befestigungsmittel wie Rippen und Nuten aufweist, jedoch die dadurch hervorgerufenen Wellen an der Innenseite des äußeren Zylinders durch einen inneren Zylinder verdeckt werden. Dadurch können sowohl die äußeren Befestigungsmittel einstückig mit dem Zylinder, als auch eine gute Oberflächeneigenschaft der inneren Lauffläche (die innere Oberfläche des inneren Zylinders) hergestellt werden, ohne dass die Innenfläche weiter nachbearbeitet werden muss.

Bevorzugt wird der innere und/oder der äußere Kunststoffzylinder mittels Spritzgußverfahren hergestellt. Spritzußverfahren werden im großen Maße verwendet um preiswert Kunsstoffteile in großen Mengen herzustellen. So ist es möglich relativ einfach und preiswert Zylindergehäuse für hydraulische Systeme herzustellen, die sowohl aufgrund der an der Außenseite ausgebildeten Befestigungsmittel leicht zu befestigen sind, als auch aufgrund der Zwei- oder Mehrteiligkeit des Herstellungsprozesses eine gute Oberfläche in dem Inneren des Zylindergehäuses aufweisen.

Weiter bevorzugt wird der innere Zylinder in den äußeren Zylinder gegossen. Durch dieses Verfahren des Gießens bzw. Spritzgießens wird der zuerst der äußere Zylinder geformt und anschließend der innere Zylinder in den äußeren (spritz-)gegossen. Dadurch verbinden sich die beiden Zylinder unlösbar, wodurch das daraus entstehende Zylindergehäuse leicht zu handhaben und zu verbauen ist.

Auch kann der äußere Zylinder aus einem vom inneren Zylinder unterschiedlichen Kunststoff gefertigt werden. Daraus ergeben sich weitere Variationsmöglichkeiten in der Konstruktion des Zylinders. So kann das Material des äußeren Zylinders den Umgebungsbedingungen etc. angepasst werden, während bei der Materialauswahl des inneren Zylinders auf Verschleißfestigkeit, Gleiteigenschaften und Dichtungseigenschaften geachtet werden kann.

Weiter umfasst die Erfindung einen Zylinder für ein hydraulisches System mit mindestens einem inneren und einen äußeren Zylinderelement wobei das äußere Zylinderelement aus einem anderen Kunststoffmaterial gespritzt und oder gegossen ist als das innere Zylinderelement. Durch die Verwendung zweier unterschiedlicher Kunststoffe kann einerseits ein preiswerter, einfacher Zylindergehäuse zur Verfügung gestellt werden, der an der äußeren Zylinderoberfläche von der inneren Oberfläche unterschiedliche Eigenschaften aufweist.

Die Erfindung wird im folgenden anhand einer Zeichnung beschrieben.
Figur 1 zeigt einen Nehmerzylinder bzw. Zylindergehäuse in einer Schnittzeichnung
Figur 2 zeigt einen Nehmerzylinder bzw. Zylindergehäuse in der Draufsicht.

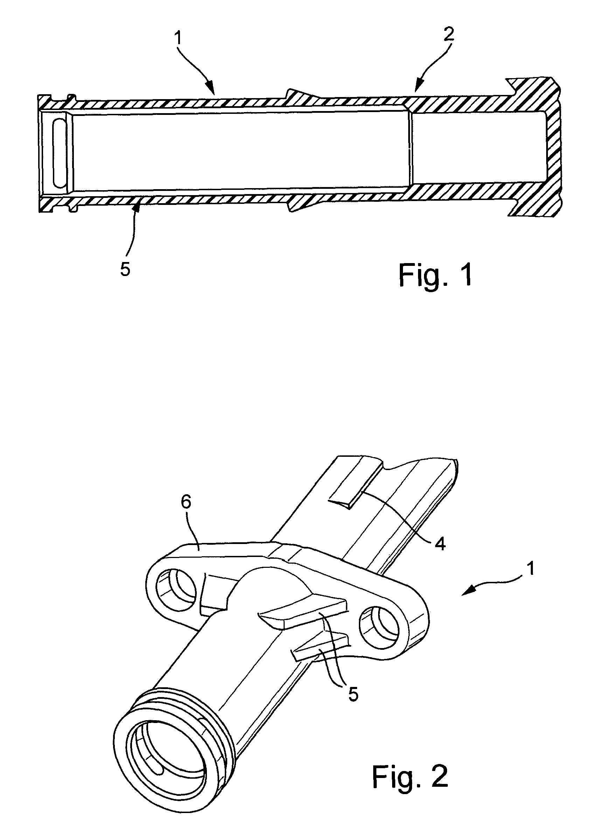

Figur 1 zeigt eine Zylindergehäuse 1 eines Nehmerzylinders, der aus zwei Materialien gegossen worden ist. Dabei werden die Außenkonturen des Zylindergehäuses 1 durch ein Element 2 geformt. Dieses Element 2 wird aus einem ersten Material wie zum Beispiel Kunststoff gegossen. Das innere Element 3, das die innere Oberfläche des Zylindergehäuses 1 zum Teil ausbildet, ist aus einem zweiten Kunststoffmaterial gegossen. Dabei ist der Teil der inneren Oberfläche des Zylindergehäuses 1, der durch das innerer Element 3 gebildet ist, die Lauffläche des Kolbens.

Figur 2 zeigt das Zylindergehäuse 1 als Draufsicht. Dabei sind an der Außenseite des Zylindergehäuses 1 Nuten 4, Rippen 5 und Flansche 6 ausgeformt, die zur Befestigung des Zylindergehäuses 1 dienen. Diese Befestigungsmittel 4,5 und 6 sind einstückig mit dem äußeren Element 2 gebildet.

### Bezugszeichenliste

1. Zylindergehäuse
2. äußeres Element
3. inneres Element
4. Nut
5. Rippen
6. Flansch

## Patentansprüche

1. Verfahren zur Herstellung von Zylindergehäusen mittels mindestens zwei Herstellungsschritten **dadurch gekennzeichnet, dass** ein Herstellungsschritt das Erzeugen eines äußeren Kunststoffzylinders und ein zweiter Herstellungsschritt das Erzeugen eines inneren Kunststoffzylinders umfasst.

2. Verfahren zur Herstellung von Zylindergehäusen nach dem vorhergehenden Anspruch, **dadurch gekennzeichnet, dass** der,innere und/oder der äußere Kunststoffzylinder mittels einem Spritzgußverfahren hergestellt werden.

3. Verfahren zur Herstellung von Zylindergehäusen nach einem der vorhergehenden Ansprüche, **dadurch gekennzeichnet, dass** der innere Zylinder in den äußeren Zylinder gegossen wird.

4. Verfahren zur Herstellung von Zylindergehäusen, **dadurch gekennzeichnet, dass** der äußere Zylinder aus einem vom inneren Zylinder unterschiedlichen Kunststoff gefertigt wird.

5. Zylindergehäuse für ein hydraulisches System umfassend mindestens einem inneren und einem äußeren Zylinder **dadurch gekennzeichnet, dass** der äußere Zylinder aus einem anderen Kunststoffmaterial gespritzt und/oder gegossen ist als der innere Zylinder.
